# EUROPÄISCHE PATENTSCHRIFT

(11) **EP 2 706 872 B1**
(45) Veröffentlichungstag und Bekanntmachung des Hinweises auf die Patenterteilung: **26.06.2019**
(21) Anmeldenummer: 12700999.1
(22) Anmeldetag: 25.01.2012
(51) Int. Cl.: A23N 12/08, A23F 5/04

(54) **VORRICHTUNG ZUR WÄRMEBEHANDLUNG EINES SCHÜTTFÄHIGEN PFLANZLICHEN GUTES**
EQUIPMENT FOR HEAT TREATMENT OF A FREE FLOWING PLANT MATERIAL.
DISPOSITIF POUR LE TRAITEMENT THERMIQUE DES MATERIAUX VEGETALS COULABLES

(30) Priorität: 09.05.2011 DE 102011101059
(43) Veröffentlichungstag der Anmeldung: 19.03.2014
(73) Patentinhaber: PROBAT-WERKE VON GIMBORN MASCHINENFABRIK GMBH, 46446 Emmerich (DE)
(72) Erfinder: ABBING, Wim, 47551 Bedburg-Hau (DE); KOZIOROWSKI, Thomas, 45475 Mülheim an der Ruhr (DE); PROEST, Karl-Heinz, 46446 Emmerich am Rhein (DE); BAUMEISTER, Heinrich, 46446 Emmerich am Rhein (DE)
(74) Vertreter: Patentanwälte ter Smitten Eberlein-Van Hoof Rütten Partnerschaftsgesellschaft mbB
(86) Internationale Anmeldenummer: PCT/EP2012/051136
(87) Internationale Veröffentlichungsnummer: WO 2012/152452

(56) Entgegenhaltungen:
- EP-A1- 1 374 704
- EP-A2- 0 288 870
- DE-B3-102007 006 268
- DE-C1- 10 156 887
- GB-A- 2 167 315
- US-A- 4 958 443

## Beschreibung

Die Erfindung betrifft eine Vorrichtung zur Wärmebehandlung eines schüttfähigen pflanzlichen Gutes, insbesondere zum Rösten von Kaffeebohnen.

Bei der Rostkaffeeproduktion ist es in der jüngeren Vergangenheit gewünscht, in möglichst kurzen Röstzeiten das gewünschte Produkt zu erhalten. Aufgrund der Entstehung von Acrylamid bei kurzen Röstzeiten werden nun auch Röstvorrichtungen verlangt, die für eine Langzeitröstung geeignet sind. Für die jeweilige Prozessart, nämlich Kurz- oder Langzeitröstung ist jeweils ein spezielles Röstsystem erforderlich. Kurze Röstzeiten werden derzeit z.B. mit Tangentialröstern realisiert.

Eine Vorrichtung zum Rösten von Kaffeebohnen ist aus DE 10 2007 006 268 B3 bekannt. Aus der US 4,958,443 A ist eine Vorrichtung bekannt, die im unteren Bereich, im letzten Abschnitt vor der Aufnahmevorrichtung, drei in Schwerkraft gesehen nebeneinander angeordnete Gaszuführkanäle aufweist, die jeweils einem Röstraum Gas mit unterschiedlichen Temperaturen je Gaszuführkanal zuführen, um den Röstprozess zu optimieren.

Nachteilig an bisher bekannten Röstvorrichtungen ist, dass diese entweder für eine Kurz- oder eine Langzeitröstung geeignet sind.

Aufgabe der Erfindung ist es, eine Vorrichtung zur Wärmebehandlung eines schüttfähigen pflanzlichen Gutes, insbesondere zum Rösten von Kaffeebohnen bereitzustellen, die gleichzeitig für eine Kurz- und Langzeitröstung geeignet ist.

Die Lösung der Aufgabe erfolgt erfindungsgemäß durch die Merkmale des Anspruchs 1.

Die erfindungsgemäße Vorrichtung ist zur Wärmebehandlung eines schüttfähigen pflanzlichen Gutes, insbesondere zum Rösten von Kaffeebohnen geeignet. Mit der erfindungsgemäßen Vorrichtung können bevorzugt auch weitere röstfähige Produkte wie Kakaobohnen, Getreidearten, Nüsse oder Ölsaaten geröstet werden.

Die erfindungsgemäße Vorrichtung weist eine Aufnahmevorrichtung zum Aufnehmen des pflanzlichen Gutes auf. Hierbei kann es sich um einen Röstbehälter, insbesondere eine Rösttrommel handeln. Es kann beispielsweise ein feststehender Röstbehälter verwendet werden, innerhalb dessen ein Mischwerk zum Mischen des Produktes angeordnet ist.

Die Vorrichtung weist ferner einen Gaszuführkanal zum Zuführen eines erhitzten Gases von einer Heizvorrichtung zu der Aufnahmevorrichtung auf. Das erhitzte Gas kann der Aufnahmevorrichtung beispielsweise durch ein Lochblech, das in Strömungsrichtung des Gases unmittelbar vor der Aufnahmevorrichtung angeordnet ist, zugeführt werden. Bevorzugt wird der Aufnahmevorrichtung lediglich ein Teil des erhitzten Gases über ein Lochblech zugeführt.

Erfindungsgemäß ist der Gaszuführkanal zumindest in Strömungsrichtung des Gases unmittelbar vor der Aufnahmevorrichtung in zwei Teilzuführkanäle aufgeteilt, durch die der Aufnahmevorrichtung erhitztes Gas zuführbar ist. Bevorzugt ist der Gaszuführkanal auf 50% bis 100% seiner Gesamtlänge in zwei Teilkanäle aufgeteilt. In einer bevorzugten Ausführungsform ist eine Aufteilung über 80% bis 90% der Gesamtlänge des Gaszuführkanals vorgesehen.

Mindestens einer der Teilzuführkanäle ist unabhängig vom anderen Teilzuführkanal vor der Aufnahmevorrichtung derart verschließbar oder in seiner Querschnittsfläche reduzierbar, dass durch diesen Teilzuführkanal im Wesentlichen kein Gas mehr zu der Aufnahmevorrichtung strömt oder dass der durch diesen Teilzuführkanal strömende Gasvolumenstrom reduzierbar ist. Ein Reduzieren der Querschnittsfläche oder ein Verschließen des einen Teilzuführkanals kann beispielsweise durch eine oder mehrere Klappen in diesem Kanal erfolgen, durch die dieser Teilzuführkanal teilweise oder vollständig verschließbar ist.

Die Gaszufuhr zur Aufnahmevorrichtung erfolgt somit unmittelbar vor der Aufnahmevorrichtung durch zwei Teilzuführkanäle, die insbesondere hinsichtlich ihrer Querschnittsfläche unterschiedlich gestaltet sein können.

Weiterhin ist der Verlauf der Querschnittsfläche dieser Teilzuführkanäle unmittelbar vor der Aufnahmevorrichtung unterschiedlich gestaltet, so dass sich einer der beiden Teilzuführkanäle unmittelbar vor der Aufnahmevorrichtung stark verjüngt, wodurch ein Düseneffekt und eine hohe Strömungsgeschwindigkeit erreicht werden kann.

Hintergrund dieser Maßnahmen ist, dass mit einer einzigen Vorrichtung wahlweise eine Kurzzeit- oder Langzeitröstung ermöglicht werden soll. Bei einer Langzeitröstung wird dem Röstbehälter bzw. der Aufnahmevorrichtung eine geringe Gasmenge unter einer hohen Temperatur zugeführt. Hierzu kann einer der Teilzuführkanäle vollständig oder teilweise verschlossen werden, so dass der Aufnahmevorrichtung ein reduzierter Gasvolumenstrom zugeführt wird. Dieser wird vorzugsweise über den anderen nicht verschlossenen Teilzuführkanal zugeführt. Bei diesem nicht verschlossenen Teilzuführkanal kann es sich um einen sich verjüngenden Kanal handeln, so dass durch diesen Teilzuführkanal beim Gaseinlass in die Aufnahmevorrichtung ein Düseneffekt erzielt wird. Durch die hohe Strömungsgeschwindigkeit im Bereich der Düse kann eine starke und schnelle Bewegung des zu röstenden Produkts im Aufnahmebehälter erreicht werden, so dass dieses durch die hohen Rösttemperaturen bei der Langzeitröstung nicht geschädigt wird. Zum Durchführen einer Kurzzeitröstung wird eine niedrige Temperatur verwendet, wobei der Aufnahmevorrichtung ein großer Gasvolumenstrom zugeführt wird. Hierfür können beispielsweise beide Teilzuführkanäle vollständig freigegeben werden, so dass das erhitzte Gas durch beide Teilzuführkanäle der Aufnahmevorrichtung zugeführt wird.

Erfindungsgemäß wird somit eine Hybridvorrichtung geschaffen, mit der sowohl eine Kurzzeitröstung als auch eine Langzeitröstung unter Beibehaltung des jeweils typischen Geschmacksprofils möglich ist. Die erfindungsgemäße Vorrichtung ermöglicht somit eine sehr flexible Handhabung, ohne dass Umbauten im Röstsystem notwendig sind. Lediglich die Röstzulufttemperatur und der Gasvolumenstrom müssen geregelt werden, um von einer Kurz- auf eine Langzeitröstung oder umgekehrt zu wechseln. Der Gasvolumenstrom ist neben der Querschnittsfläche der Teilzuführkanäle auch über das Heißluftgebläse regelbar.

Eine Kurzzeitröstung kann beispielsweise mit einer Gastemperatur von circa 300°C erfolgen, während eine Langzeitröstung bei einer Temperatur von circa 550°C stattfinden kann. Grundsätzlich kann ein Röstvorgang in der erfindungsgemäßen Vorrichtung zwischen 1,5 bis 18 min dauern, wobei die Röstzulufttemperatur im Bereich von 270°C bis 600°C liegen kann.

Erfolgt die Gaszufuhr zum Aufnahmebehälter über ein Lochblech, ist es bevorzugt, dass der Gasvolumenstrom über das Lochblech im Bereich von 0% bis 100% variabel eingestellt werden kann.

Dies kann dadurch erreicht werden, dass einer der Teilzuführkanäle in Strömungsrichtung unmittelbar vor der Aufnahmevorrichtung insbesondere durch mehrere Klappen, die in Strömungsrichtung parallel zueinander angeordnet sind, verschließbar ist. Diese Klappen können als jalousieartig drehbare Lamellen ausgebildet sein, die beispielsweise in Strömungsrichtung vor dem Lochblech angeordnet sind und dieses teilweise oder vollständig verschließen können. Unter einer parallelen Anordnung der Klappen wird verstanden, dass es notwendig ist, sämtliche dieser Klappen zu schließen, um die Gaszufuhr durch diesen Teilzuführkanal vollständig zu unterbinden. Im Gegensatz hierzu würde es bei einer seriellen Anordnung der Klappen lediglich notwendig sein, eine dieser Klappen zu schließen, um die Gaszufuhr durch einen Kanal zu unterbinden. Bevorzugt führt nur einer der Teilzuführkanäle zu dem Lochblech, während der andere beispielsweise zu einem offenen Luftzuführspalt in Richtung der Aufnahmevorrichtung führt.

Bevorzugt sind die beiden Teilzuführkanäle durch ein Trennelement, beispielsweise ein Trennblech, voneinander getrennt. Dieses Trennelement kann eine verschließbare Öffnung aufweisen. Am Rand dieser Öffnung kann eine der Klappen derart angelenkt sein, dass die Öffnung verschlossen ist, wenn diese Klappe vollständig geöffnet ist. Ist diese Klappe dagegen geschlossen, so dass die Gaszufuhr über das Lochblech nicht möglich ist, so ist die Öffnung im Trennelement geöffnet. Die genannte Klappe ist vorzugsweise derart am Rand der Öffnung angelenkt, dass sie im geschlossenen Zustand der Klappe (d.h. bei geöffneter Öffnung) den Gasstrom vom einen Teilzuführkanal, der dann durch die geschlossenen Klappen in Richtung des Aufnahmebehälters verschlossen ist, durch die Öffnung zum anderen Teilzuführkanal leitet, der sich bevorzugt unterhalb dieser Öffnung befindet. Über diesen anderen Teilzuführkanal wird somit das gesamte Gas aus der Heizvorrichtung der Aufnahmevorrichtung zugeführt. In dieser Position der Klappen wird der Aufnahmevorrichtung über den nicht verschlossenen Teilzuführkanal Gas mit einer sehr hohen Strömungsgeschwindigkeit zugeführt, was eine starke Bewegung des zu röstenden Produkts innerhalb der Aufnahmevorrichtung bewirkt. Hierdurch ist es möglich, hohe Rösttemperaturen zu verwenden.

In einer bevorzugten Ausführungsform weist einer der Teilzuführkanäle in Strömungsrichtung unmittelbar vor der Aufnahmevorrichtung eine Querschnittsfläche auf, die 10% bis 30% der Querschnittsfläche des anderen Teilzuführkanals unmittelbar vor der Aufnahmevorrichtung beträgt. Hierbei kann sich der Teilzuführkanal mit der kleineren Querschnittsfläche in seinem letzten Abschnitt vor der Aufnahmevorrichtung verjüngen, während sich der andere Teilzuführkanal in demselben Abschnitt verbreitert. Die Verjüngung bzw. Verbreiterung der Teilzuführkanäle erfolgt vorzugsweise in Schwerkraftrichtung nach unten und oben, insbesondere senkrecht zur Verlaufsrichtung des Gaszuführkanals.

Die Verbreiterung des einen Teilzuführkanals kann dadurch erreicht werden, dass beispielsweise seine untere Begrenzung in einem Abschnitt unmittelbar vor der Aufnahmevorrichtung einen Knick von 20° bis 45° nach unten aufweist, während seine obere Begrenzung in diesem Abschnitt noch weiter parallel verläuft. Der sich verbreiternde Teilzuführkanal ist hierbei in Schwerkraftrichtung über dem sich verjüngenden Teilzuführkanal angeordnet. Die Verjüngung des unteren Teilzuführkanals erfolgt bevorzugt unmittelbar vor der Aufnahmevorrichtung über eine Länge von weniger als 40 cm. Der obere Teilzuführkanal ist dagegen über einen größeren Abschnitt von bevorzugt bis zu ca. 1m verbreitert.

In einer alternativen Ausführungsform ist es weiterhin bevorzugt, dass der Teilzuführkanal mit dem größeren Querschnitt durch mindestens eine Klappe unabhängig vom anderen Teilzuführkanal verschließbar ist.

Gleichzeitig kann der Teilzuführkanal mit dem kleineren Querschnitt zusätzlich zu dem anderen verschließbaren Teilzuführkanal über eine separate Klappe unabhängig vom anderen Teilzuführkanal verschließbar sein.

Die Klappe zum Verschließen des Teilzuführkanals mit dem kleineren Querschnitt kann derart am Rand der Öffnung im Trennelement, das die beiden Teilzuführkanäle trennt, angelenkt sein, dass die Öffnung bei vollständig geschlossener Klappe verschlossen ist. Durch die genannte Klappe ist es mit anderen Worten möglich, die Öffnung im Trennelement vollständig zu verschließen, so dass die beiden Teilzuführkanäle voneinander getrennt sind. In dieser Position der letztgenannten Klappe muss die andere Klappe zum Verschließen des Teilzuführkanals mit dem größeren Querschnitt geöffnet sein, so dass dem Aufnahmebehälter das erhitzte Gas ausschließlich über den Teilzuführkanal mit dem größeren Querschnitt zugeführt wird.

Weiterhin kann die Klappe zum Verschließen des Teilzuführkanals mit dem größeren Querschnitt derart positioniert sein, dass sie in ihrer geschlossenen Stellung das Gas durch die Öffnung im Trennelement zum Teilzuführkanal mit dem kleineren Querschnitt leitet. Die Klappe zum Verschließen des Teilzuführkanals mit dem größeren Querschnitt wird somit in dieser Position zur Begrenzungswand des sich verjüngenden Teilzuführkanals.

Bei der Ausführungsform der erfindungsgemäßen Vorrichtung, in der der Teilzuführkanal mit dem größeren Querschnitt durch mehrere Klappen verschlossen wird, können hierzu beispielsweise drei Klappen verwendet werden. Hierbei kann ihr maximaler Öffnungswinkel variieren und insbesondere in Richtung des anderen, insbesondere des unteren Teilzuführkanals, abnehmen. Beispielsweise kann der maximale Öffnungswinkel, der am weitesten vom anderen Teilzuführkanal entfernten Klappe ca. 40°-50° betragen, während der maximale Öffnungswinkel der mittleren Klappe ca. 30°-40° und der der dem anderen Teilzuführkanal benachbarten Klappe ca. 22°-32° beträgt. Als ein Öffnungswinkel von 0° wird hierbei diejenige Position der einzelnen Klappe verstanden, in der diese Klappe vollständig geschossen ist. Weisen somit sämtliche Klappen einen Öffnungswinkel von 0° auf, ist die Gaszufuhr zur Aufnahmevorrichtung über diesen Teilzuführkanal vollständig unterbunden.

Durch die unterschiedlichen maximalen Öffnungswinkel ist es möglich, verbesserte Strömungsbedingungen zu schaffen, was insbesondere in Verbindung mit Tangentialröstern und nach unten abknickenden Teilzuführkanälen sinnvoll ist.

Es ist weiterhin bevorzugt, dass der Zuführkanal und/oder die beiden Teilzuführkanäle in ihrem letzten Abschnitt in Strömungsrichtung des Gases vor der Aufnahmevorrichtung einen Knick um 20°-45° in Schwerkraftrichtung nach unten aufweisen. Hierbei wird der Winkel dieses Knicks insbesondere durch den Verlauf des Trennelements zwischen den beiden Teilzuführkanälen definiert. Bevorzugt ist diejenige der drei Klappen, die an der Öffnung in dem Trennelement angelenkt ist, soweit zu öffnen, dass sie die Öffnung im Trennelement vollständig verschließen kann. Der maximale Öffnungswinkel dieser Klappe entspricht somit dem Winkel, in dem das Trennelement aus der Waagerechten nach unten abgeknickt ist.

Es ist weiterhin bevorzugt, dass die beiden Teilzuführkanäle durch Klappen teilweise oder vollständig verschließbar sind, so dass der Gasvolumenstrom, der durch jeden Teilzuführkanal strömt separat, insbesondere stufenlos regelbar ist. Hierbei kann entweder einer oder beide Teilzuführkanäle verschließbar sein.

Die Teilzuführkanäle können derart ausgebildet sein, dass ca. 60%-80% des Gasvolumenstroms durch den sich verbreiterenden Teilzuführkanal strömen, während ca. 10%-40% des Gasvolumenstroms durch den sich verjüngenden Teilzuführkanal strömen.

Im Folgenden werden bevorzugte Ausführungsformen der Erfindung anhand von Figuren erläutert.

Es zeigen:
- Figuren 1 und 2: eine teilweise geschnittene Seitenansicht einer ersten Ausführungsform der erfindungsgemäßen Vorrichtung,
- Figur 3: eine teilweise geschnittene Schrägansicht der ersten Ausführungsform der erfindungsgemäßen Vorrichtung,
- Figuren 4 und 5: eine teilweise geschnittene Seitenansicht einer zweiten Ausführungsform der erfindungsgemäßen Vorrichtung,
- Figur 6: eine teilweise geschnittene Schrägansicht der zweiten Ausführungsform der erfindungsgemäßen Vorrichtung.

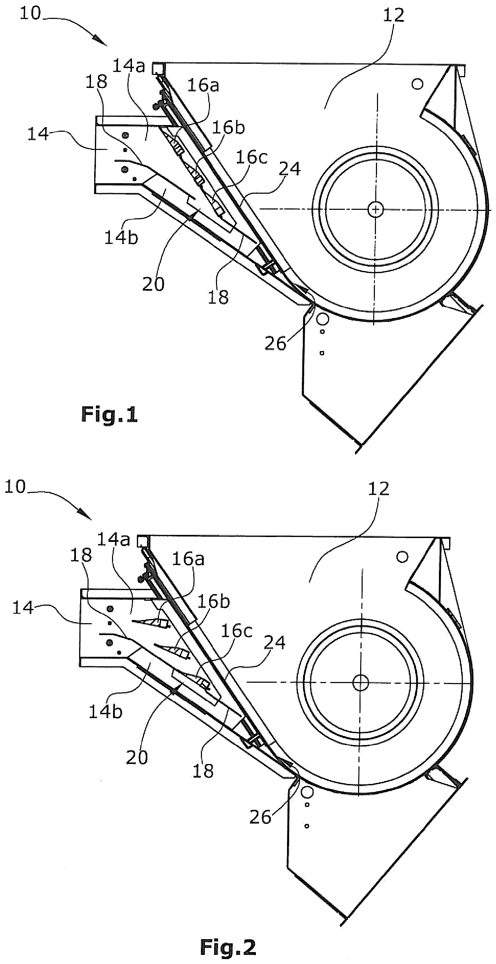

Die Vorrichtung gemäß Figur 1 weist einen feststehenden Röstbehälter 12 auf, der über ein Lochblech 24 mit dem oberen Teilzuführkanal 14a verbunden ist. Dieser verbreitert sich in seinem letzten Abschnitt vor der Rösttrommel 12. Der untere Teilzuführkanal 14b weist in diesem Abschnitt eine konstante Querschnittsfläche auf und verjüngt sich lediglich unmittelbar vor dem Röstbehälter 12 in Richtung eines Luftzuführspalts 26. Im Bereich dieses Luftzuführspalts wird die Luft der Rösttrommel 12 insbesondere tangential zugeführt. Die beiden Teilzuführkanäle sind durch ein Leitblech 18 voneinander getrennt. Dieses weist eine Öffnung 20 auf, die durch die untere der drei Klappen 16c verschließbar ist. Die Gaszufuhr durch den ersten Teilzuführkanal 14a zum Lochblech 24 kann durch die drei Klappen 16a, 16b, 16c verschlossen werden. Sofern diese Klappen geschlossen sind, leiten sie das Gas aus dem oberen Teilzuführkanal 14a durch die Öffnung 20 in den unteren Teilzuführkanal 14b und von dort durch den Luftspalt 26 in die Rösttrommel 12. Hierdurch wird eine hohe Strömungsgeschwindigkeit im Bereich des Luftspalts 26 erreicht, die eine starke Verwirbelung des Produkts in der Rösttrommel 12 verursacht.

Die obere der drei Klappen 16a weist den größten Öffnungswinkel auf und kann beispielsweise in einem Bereich von 0° bis 50° geöffnet werden. Die mittlere Klappe kann in einem Bereich von 0° bis 40° geöffnet werden, während die untere Klappe in einem Bereich von 0° bis 32° geöffnet werden kann. Bei einem Öffnungswinkel von 32° verschließt die untere Klappe 16c die Öffnung 20.

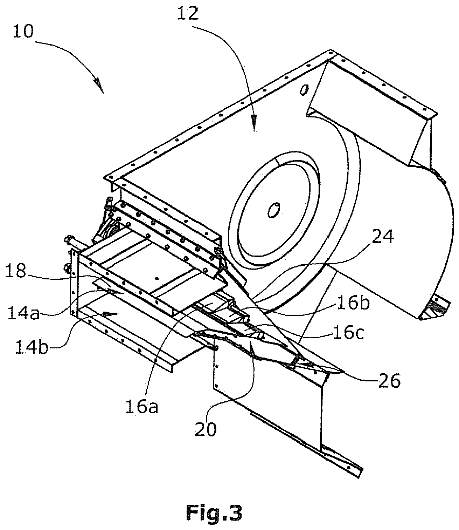

Dieselbe Röstvorrichtung ist in Figur 3 als dreidimensionale Schrägansicht dargestellt. Die Heizvorrichtung, durch die das Gas erhitzt wird, das der Aufnahmevorrichtung 12 zugeführt wird, ist in den Figuren nicht dargestellt. Hierzu können Heizgebläse, wie sie aus dem Stand der Technik bekannt sind, verwendet werden.

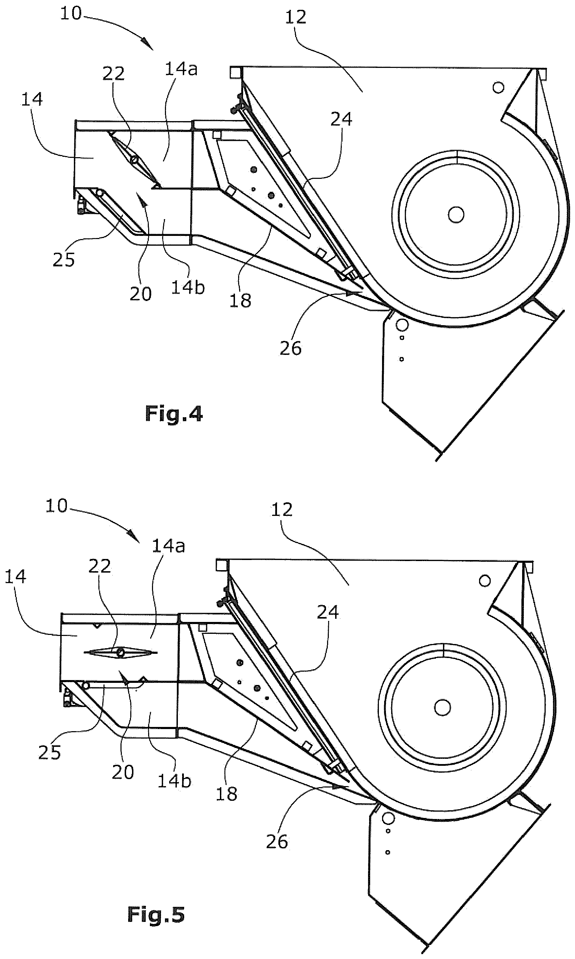

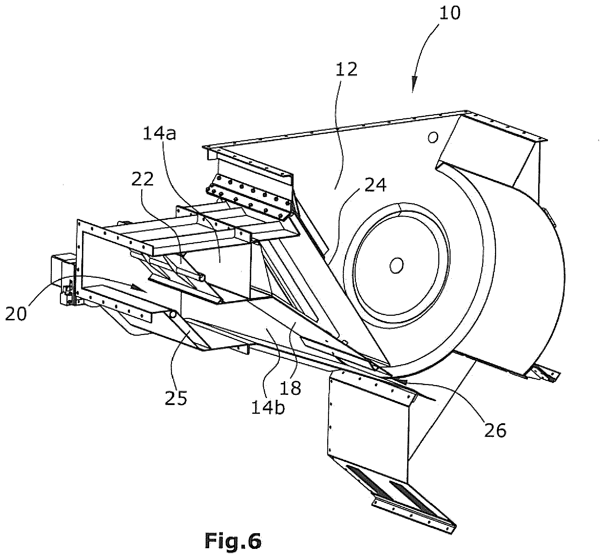

In den Figuren 4 bis 6 ist eine alternative Ausführungsform der erfindungsgemäßen Vorrichtung dargestellt. Auch diese umfasst einen feststehenden Röstbehälter mit einem nicht dargestellten Mischwerk, der über ein Lochblech 24 mit den beiden Teilzuführkanälen 14a, 14b verbunden ist. In Strömungsrichtung des Gases vor den beiden Teilzuführkanälen 14a, 14b ist der Gaszuführkanal 14 noch nicht aufgeteilt.

Die beiden Teilzuführkanäle 14a, 14b sind in ihrem letzten Abschnitt vor der Rösttrommel 12 durch ein Leitblech 18 voneinander getrennt. Im Unterschied zu der ersten Ausführungsform gemäß den Figuren 1 bis 3 verjüngt sich der untere Teilzuführkanal 14b in einem größeren Abschnitt vor der Rösttrommel 12. Dieser Kanal endet wiederum im Luftzuführspalt 26.

Das Leitblech 18 weist auch bei dieser Ausführungsform eine Ausnehmung 20 auf. Diese ist im Gegensatz zu der Ausführungsform gemäß den Figuren 1 bis 3 in Strömungsrichtung des Gases weiter vorne angeordnet und kann durch die Klappe 25 verschlossen werden. Diese Klappe 25 ist an dem in Strömungsrichtung vorderen Rand der Öffnung 20 angelenkt. Sofern die Klappe 25 geöffnet ist, ist es bevorzugt, dass die Klappe 22 den oberen Teilzuführkanal 14a verschließt und somit die Luft aus dem Gaszuführkanal 14 in Richtung des unteren Teilzuführkanals 14b leitet. In dieser Position kann eine lange Röstzeit gefahren werden, während bei geöffneter Klappe 22 eine kurze Röstzeit mit einer niedrigeren Temperatur gefahren wird und der Bereich des Lochblechs 24 zur Luftzufuhr freigegeben wird. Wird hierbei die untere Klappe 25 verschlossen, so strömt durch den unteren Teilzuführkanal 14b kein Gas in die Rösttrommel 12. Der durch den engen Luftspalt 26 verursachte Düseneffekt tritt somit hierbei nicht auf.

Beim Verfahren zum Betreiben der erfindungsgemäßen Vorrichtung wird somit für eine Langzeitröstung ein Teilzuführkanal 14a zumindest teilweise verschlossen, so dass die Gaszufuhr von einer Heizvorrichtung zur Aufnahmevorrichtung 12 insbesondere vollständig über den anderen nicht verschlossenen Teilzuführkanal 14b erfolgt. Hierbei wird eine hohe Rösttemperatur im Bereich von 500°C bis 600°C verwendet. Bei der Langzeitröstung erfolgt somit die Luftzufuhr bevorzugt über den sich verjüngenden Teilzuführkanal 14b.

Für eine Kurzzeitröstung wird der Aufnahmevorrichtung 12 das erhitzte Gas über den sich verbreiternden Teilzuführkanal 14a zugeführt. Zusätzlich kann das Gas der Aufnahmevorrichtung 12 auch über den anderen Teilzuführkanal 14b zugeführt werden. Hierbei wird sowohl bei der Langzeit- als auch bei der Kurzzeitröstung die gleiche Vorrichtung verwendet. Bei einer Kurzzeitröstung kann die Röstzeit zwischen 1,5 min und 5 min betragen, während sie bei einer Langzeitröstung 8 min bis 18 min betragen kann. In einem Bereich zwischen 3 min bis 10 min kann die erfindungsgemäße Vorrichtung ebenfalls eingesetzt werden, wobei die entsprechenden Klappen hier beispielsweise Zwischenpositionen einnehmen können.

## Patentansprüche

1. Vorrichtung zur Wärmebehandlung eines schüttfähigen pflanzlichen Gutes, insbesondere zum Rösten von Kaffeebohnen, mit
einer Aufnahmevorrichtung (12) zum Aufnehmen des pflanzlichen Gutes,
einem Gaszuführkanal (14) zum Zuführen eines erhitzten Gases von einer Heizvorrichtung zu der Aufnahmevorrichtung (12), wobei
der Gaszuführkanal (14) zumindest in Strömungsrichtung des Gases vor der Aufnahmevorrichtung (12) in mindestens zwei aufeinanderfolgende Teilzuführkanäle (14a, 14b) aufgeteilt ist, durch die der Aufnahmevorrichtung (12) erhitztes Gas zuführbar ist, wobei
mindestens einer der Teilzuführkanäle (14a) unabhängig vom anderen Teilzuführkanal (14b) vor der Aufnahmevorrichtung (12) derart verschließbar oder in seinem Querschnitt reduzierbar ist, dass durch diesen Teilzuführkanal (14a) im Wesentlichen kein Gas mehr zu der Aufnahmevorrichtung (12) strömt oder dass der durch diesen Teilzuführkanal (14a) strömende Gasvolumenstrom reduzierbar ist,
**dadurch gekennzeichnet, dass**
zwei Teilzuführkanäle (14a, 14b) vorgesehen sind, wobei sich ein Teilzuführkanal (14a) unmittelbar vor der Aufnahmevorrichtung (12) in seinem letzten Abschnitt verbreitet und sich der andere Teilzuführkanal (14b) unmittelbar vor der Aufnahmevorrichtung (12) in seinem letzten Abschnitt verjüngt, wobei der sich verbreiternde Teilzuführkanal (14a) in Schwerkraftrichtung über dem sich verjüngenden Teilzuführkanal (14b) angeordnet ist.

2. Vorrichtung nach Anspruch 1, **dadurch gekennzeichnet, dass** einer der Teilzuführkanäle (14a) in Strömungsrichtung des Gases unmittelbar vor der Aufnahmevorrichtung (12), insbesondere durch mehrere Klappen (16, 16b, 16c), die in Strömungsrichtung parallel zueinander angeordnet sind, verschließbar ist, wobei die Klappen insbesondere als jalousieartig drehbare Lamellen ausgebildet sind.

3. Vorrichtung nach Anspruch 2, **dadurch gekennzeichnet, dass** die beiden Teilzuführkanäle (14a, 14b) durch ein Trennelement (18) voneinander getrennt sind, dieses Trennelement eine verschließbare Öffnung (20) aufweist und insbesondere eine der Klappen (16c) derart am Rand dieser Öffnung (20) angelenkt ist, dass die Öffnung bei vollständig geöffneter Klappe (16c) verschlossen ist.

4. Vorrichtung nach einem der Ansprüche 1 bis 3, **dadurch gekennzeichnet, dass** einer der Teilzuführkanäle (14b) in Strömungsrichtung des Gases unmittelbar vor der Aufnahmevorrichtung (12) eine Querschnittsfläche aufweist, die 10% bis 30% der Querschnittsfläche des anderen Teilzuführkanals (14a) unmittelbar vor der Aufnahmevorrichtung beträgt.

5. Vorrichtung nach Anspruch 4, **dadurch gekennzeichnet, dass** der Teilzuführkanal (14a) mit der größeren Querschnittsfläche durch eine Klappe (22) unabhängig vom anderen Teilzuführkanal (14b) verschließbar ist.

6. Vorrichtung nach Anspruch 5, **dadurch gekennzeichnet, dass** der Teilzuführkanal (14b) mit der kleineren Querschnittsfläche zusätzlich zu dem anderen verschließbaren Teilzuführkanal (14a) über eine separate Klappe (25) unabhängig vom anderen Teilzuführkanal (14a) verschließbar ist.

7. Vorrichtung nach Anspruch 3 und 6, **dadurch gekennzeichnet, dass** die Klappe (25) zum Verschließen des Teilzuführkanals (14b) mit der kleineren Querschnittsfläche derart am Rand der Öffnung (20) angelenkt ist, dass die Öffnung bei vollständig geschlossener Klappe (25) verschlossen ist und die Klappe (22) zum Verschließen des Teilzuführkanals (14a) mit der größeren Querschnittsfläche derart positioniert ist, dass sie in geschlossener Stellung das Gas zum Teilzuführkanal (14b) mit der kleineren Querschnittsfläche leitet.

8. Vorrichtung nach Anspruch 2 und 4, **dadurch gekennzeichnet, dass** der Teilzuführkanal (14a) mit der größeren Querschnittsfläche durch mehrere Klappen, insbesondere durch drei Klappen (16a, 16b, 16c) verschließbar ist, deren maximaler Öffnungswinkel in Richtung des anderen Teilzuführkanals (14b) insbesondere abnimmt, wobei insbesondere der maximale Öffnungswinkel, der am weitesten vom anderen Teilzuführkanal (14b) entfernten Klappe (16a) circa 40°-50° beträgt, der der mittleren Klappe circa 30°-40° und der der zum anderen Teilzuführkanal (14b) benachbarten Klappe 22°-32°.

9. Vorrichtung nach einem der Ansprüche 1 bis 8, **dadurch gekennzeichnet, dass** der Zuführkanal (14) und/oder die beiden Teilzuführkanäle (14a, 14b) in ihrem letzten Abschnitt in Strömungsrichtung des Gases vor der Aufnahmevorrichtung (12) einen Knick um 20° bis 45° in Schwerkraftrichtung nach unten aufweisen.

10. Vorrichtung nach einem der Ansprüche 1 bis 9, **dadurch gekennzeichnet, dass** die beiden Teilzuführkanäle (14a, 14b) durch Klappen (16a, 16b, 16c, 22, 24) teilweise oder vollständig verschließbar sind, so dass der Gasvolumenstrom, der durch jeden Teilzuführkanal (14a, 14b) strömt, separat, insbesondere stufenlos, regelbar ist, so dass durch dieselbe Vorrichtung (10) ohne Austausch des Aufnahmebehälters (12) das erhitzte Gas während einer Kurzzeitröstung eine Temperatur von 260°C bis 360°C und während einer Langzeitröstung zwischen 400°C und 550°C aufweisen kann.

## Claims

1. A device for thermally treating a pourable plant product, particularly for roasting coffee beans, comprising
a receiving device (12) for receiving said plant product,
a gas supply channel (14) for supplying a heated gas from a heating device to the receiving device (12),
wherein the gas supply channel (14) is divided, at least in the direction of the gas flow and directly upstream of the receiving device (12), into two supply sub-channels (14a, 14b) following each other in the direction of gravity, through which heated gas can be supplied to said receiving device (12),
wherein at least one of the supply sub-channels (14a) can be closed or can be reduced in its cross-sectional area, independently from the other supply sub-channel (14b) and upstream of the receiving device (12), in such a manner that substantially no more gas is flowing to the receiving device (12) through said supply sub-channel (14a), or that the gas volume flow through said supply sub-channel (14a) can be reduced,
**characterized in that**
two supply sub-channels (14a, 14b) are provided, one supply sub-channel (14a) is widened in its end section immediately upstream of the receiving device (12) and the other supply sub-channel (14b) is tapered in its end section immediately upstream of the receiving device (12), the widening supply sub-channel (14a) being arranged above the tapering supply sub-channel (14b), seen in the direction of gravity.

2. The device according to claim 1, **characterized in that** one of the supply sub-channels (14a), in the direction of the gas flow and directly upstream of the receiving device (12), can be closed particularly by a plurality of flaps (16, 16a, 16b) arranged parallel to each other in flow direction, said flaps being designed particularly as lamellae which can be rotated in the manner of Venetian blinds.

3. The device according to claim 2, **characterized in that** the two supply sub-channels (14a, 14b) are separated from each other by a separating element (18), that said separating element comprises a closable opening (20), and that, particularly, one of the flaps (16c) is hinged on the edge of said opening (20) is such a manner that said opening is closed in the fully opened state of the valve (16c).

4. The device according to any one of claims 1 to 3, **characterized in that** one of the supply sub-channels (14b), directly upstream of the receiving device (12) as viewed in the gas flow direction, has a cross-sectional area which amounts to 10% to 30% of the cross-sectional area of the other supply sub-channel (14a) directly upstream of the receiving device.

5. The device according to claim 4, **characterized in that** the supply sub-channel (14a) having the larger cross sectional area can be closed independently from the other supply sub-channel (14b) by a flap (22).

6. The device according to claim 5, **characterized in that** the supply sub-channel (14b) having the smaller cross section can be closed, in addition to the other closeable supply sub-channel (14a), by a separate flap (25) independently from the other supply sub-channel (14a).

7. The device according to claim 3 and 6, **characterized in that** the flap (25) for closing the supply sub-channel (14b) having the smaller cross sectional area is hinged in such a manner on the edge of said opening (20) that, in the fully closed state of the flap (25), the opening is closed, and the flap (22) for closing the supply sub-channel (14a) having the larger cross section is located in such a manner that, when in its closed position, it will conduct the gas to the supply sub-channel (14b) having the smaller cross section.

8. The device according to claim 2 and 4, **characterized in that** the supply sub-channel (14a) having the larger cross sectional area can be closed by a plurality of flaps, particularly by three flaps (16a, 16b, 16c), with the maximum opening angle of said flaps particularly decreasing in the direction of the other supply sub-channel (14b), wherein, particularly, the maximum opening angle of the flap (16a) farthest away from the other supply sub-channel (14b) is about 40° - 50°, the maximum opening angle of the intermediate flap is about 30° - 40° and the maximum opening angle of the flap adjacent to the other supply sub-channel (14b) is about 22° - 32°.

9. The device according to any one of claims 1 to 8, **characterized in that** the sub-channel (14) and/or the two supply sub-channels (14a, 14b) comprise, in their last section as viewed in the gas flow direction and upstream of the receiving device (12), a bend of 20° - 45° downward in the direction of gravity.

10. The device according to any one of claims 1 to 9, **characterized in that**, by means of flaps (16a, 16b, 16c, 22, 24), the two supply sub-channels (14a, 14b) can be closed fully or partially so that the gas volume flow passing through each supply sub-channel (14a, 14b) can be controlled separately and particularly in a stepless manner, so that, by use of the same device (10), without exchanging the receiving bin (12), the heated gas can have a temperature of 260°C to 360°C during short-time roasting and of 400°C to 550°C during long-time roasting.

## Revendications

1. Dispositif pour le traitement thermique d'un matériau végétal coulable, notamment pour le grillage de grains de café, avec
un dispositif de réception (12) pour recevoir le matériau végétal,
un canal d'amenée de gaz (14) pour amener un gaz chauffé à partir d'un dispositif de chauffage vers le dispositif de réception (12),
le canal d'amenée de gaz (14) étant divisé, au moins dans la direction d'écoulement du gaz en amont du dispositif de réception (12), en au moins deux sous-canaux d'amenée (14a, 14b) successifs, par lesquels du gaz chauffé peut être amené au dispositif de réception (12),
au moins un des sous-canaux d'amenée (14a) pouvant être fermé ou réduit en section transversale, en amont du dispositif de réception (12) et indépendemment de l'autre sous-canal d'amenée (14b), de sorte qu'essentiellement aucun gaz n'écoule plus vers le dispositif de réception (12) à travers ce sous-canal d'amenée (14a) ou que le débit volumique de gaz s'écoulant à travers ce sous-canal d'amenée (14a) peut être réduit,
**caractérisé en ce que**
deux sous-canaux d'amenée (14a, 14b) sont prévus, dont un sous-canal d'amenée (14a) s'élargit dans sa section terminale, directement en amont du dispositif de réception (12), et l'autre sous-canal d'amenée (14b) s'effile dans sa section terminale, directement en amont du dispositif de réception (12), le sous-canal d'amenée (14a) s'élargissant étant disposé au-dessus du sous-canal d'amenée (14a) s'éffilant, vu dans la direction de gravité.

2. Dispositif selon la revendication 1, **caractérisé en ce qu'**un des sous-canaux d'amenée (14a) peut être fermé dans la direction d'écoulement du gaz directement en amont du dispositif de réception (12), notamment par plusieurs clapets (16, 16b, 16c) disposés en parallèle dans la direction d'écoulement, lesdits clapets étant notamment conçus comme lames pouvant être tournées comme un rideau roulant.

3. Dispositif selon la revendication 2, **caractérisé en ce que** les deux sous-canaux d'amenée (14a, 14b) sont séparés par un élément de séparation (18), que cet élément de séparation présent une ouverture (20) obturable et notamment un des clapets (16c) est articulé sur le bord de cette ouverture (20) de sorte que l'ouverture soit fermée quand le clapet (16c) est complètement ouvert.

4. Dispositif selon l'une quelconque des revendications 1 à 3, **caractérisé en ce qu'**un des sous-canaux d'amenée (14b) présent une surface de section transversale, dans la direction d'écoulement du gaz directement en amont du dispositif de réception (12), laquelle surface étant 10% à 30% de la surface de section transversale de l'autre sous-canal d'amenée (14a) directement en amont du dispositif de réception.

5. Dispositif selon la revendication 4, **caractérisé en ce que** le sous-canal d'amenée (14a) ayant la surface de section transversale plus grande peut être fermé par un clapet (22) indépendemment de l'autre sous-canal d'amenée (14b).

6. Dispositif selon la revendication 5, **caractérisé en ce que** le sous-canal d'amenée (14b) ayant la surface de section transversale plus petite peut être fermé, en plus de l'autre sous-canal d'amenée (14a) obturable, par un clapet (25) indépendemment de l'autre sous-canal d'amenée (14a).

7. Dispositif selon les revendications 3 et 6, **caractérisé en ce que** le clapet (25) pour fermer le sous-canal d'amenée (14b) ayant la surface de section transversale plus petite est articulé sur le bord de l'ouverture (20) de sorte qu'en état complètement fermé du clapet (25), ladite ouverture est fermée, le clapet (22) pour fermer le sous-canal d'amenée (14a) ayant la surface de section transversale plus grande est positionné de sorte que, dans la position fermée, il mène le gaz vers le sous-canal d'amenée (14b) ayant la surface de section transversale plus petite.

8. Dispositif selon les revendication 2 et 4, **caractérisé en ce que** le sous-canal d'amenée (14a) ayant la surface de section transversale plus grande peut être fermé par plusieurs clapets, notamment trois clapets (16a, 16b, 16c), dont l'angle d'ouverture maximal notamment décroit vers l'autre sous-canal d'amenée (14b), notamment l'angle d'ouverture maximal du clapet (16a) le plus distant de l'autre sous-canal d'amenée (14b) étant ca. 40° - 50°, l'angle du clapet étant ca. 30° - 40°, et l'angle du clapet voisin de l'autre sous-canal d'amenée (14b) étant 22° - 32°.

9. Dispositif selon l'une quelconque des revendications 1 à 8, **caractérisé en ce que**, dans leur dernière section dans la direction d'écoulement du gaz en amont dudit dispositif de réception (12), le canal d'amenée (14) et/ou les deux sous-canaux d'amenée (14a, 14b) présentent une courbure de 20° à 45° vers le bas dans la direction de gravité.

10. Dispositif selon l'une quelconque des revendications 1 à 9, **caractérisé en ce que** es deux sous-canaux d'amenée (14a, 14b) peuvent être fermés en partie ou complètement par des clapets (16a, 16b, 16c, 22, 24), de sorte que le débit volumique de gaz s'écoulant á travers chaque sous-canal d'amenée (14a, 14b) peut être réglé séparément, notamment en continu, de sorte que, par un même dispositif (10) et sans remplacement du récipient (12), le gaz chauffé puisse atteindre une température de 260°C à 360°C pendant un grillage de courte durée et de 400°C à 550°C pendant un grillage de longue durée.
